# EUROPÄISCHE PATENTSCHRIFT

(11) **EP 0 916 430 B1**
(45) Veröffentlichungstag und Bekanntmachung des Hinweises auf die Patenterteilung: **24.06.2009**
(21) Anmeldenummer: 97119939.3
(22) Anmeldetag: 14.11.1997
(51) Int. Cl.: B22C 1/02, B22C 1/18, A61C 13/20

(54) **Verfahren zur Steuerung und Einstellung der Expansion von keramischen Einbettmassen**
Process for controlling the expansion of ceramic molding material
Procédé pour le contrôle de l'expansion de matériau pour le moulage de précision

(43) Veröffentlichungstag der Anmeldung: 19.05.1999
(73) Patentinhaber: SHERA-WERKSTOFFTECHNOLOGIE GMBH, 49448 Lemförde (DE)
(72) Erfinder: Haider Otmar, Chemie-Ing., 49459 Lembruch (DE); Nowack Norbert, Prof.,Dr.-Ing., 47877 Willich (Anrath) (DE); Grill Günther, 49448 Lemförde (DE)
(74) Vertreter: Stenger, Watzke & Ring

(56) Entgegenhaltungen:
- EP-A- 0 417 527
- DE-A- 4 210 004
- US-A- 4 591 385
- US-A- 4 814 011
- PATENT ABSTRACTS OF JAPAN vol. 006, no. 069 (M-125), 30.April 1982 & JP 57 009554 A (TOKUYAMA SODA CO LTD), 19.Januar 1982, & DATABASE WPI Derwent Publications Ltd., London, GB; AN 82-14888E
- DATABASE WPI Section Ch, Week 9709 Derwent Publications Ltd., London, GB; Class E17, AN 97-098461 XP002063910 & RU 2 061 572 C (KLIMKIN A V) , 10.Juni 1996

## Beschreibung

Die Erfindung betrifft ein Verfahren zur Herstellung von Feingussteilen für medizinische Zweke In der Medizintechnik und dabei insbesondere in der Dentaltechnik werden Prothetikteile, wenn diese individuell für jeden Patienten hergestellt werden müssen, sowohl aus biokompatiblen Metallen und Legierungen, beispielsweise auf der Basis von Titan (Ti), Palladium (Pd), Nickel-Chrom (NiCr), Cobalt-Chrom (CoCr) als auch aus glaskeramischen Werkstoffen gefertigt, indem entsprechende Gußformen geschaffen werden, in die die flüssigen Legierungen oder das flüssige Glas der späteren Glaskeramik eingebracht, beispielsweise gegossen werden. Nach dem Erstarren der Legierung bzw. des glaskeramischen Werkstoffes wird die Gußform entfernt und man erhält das Legierungsgußteil. Zum Herstellen dieser Gußformen werden in der Regel Gußeinbettmassen verwendet, die auf einem Keramiksystem basieren.

Bei der Herstellung filigraner Präzisionsgußteile für medizinische Zwecke, beispielsweise für Zahnersatz, aus biokompatiblen Materialien sind dabei die folgenden Verfahrensschritte erforderlich:
1. Aus einem Abdruck eines zu rekonstruierenden Körperteiles, beispielsweise einem Zahn oder einem Knochensegment, wird ein präzises Wachsmodell erstellt.
2. Zur Herstellung einer Gußform wird das Wachsmodell in eine keramische Einbettmasse eingebettet. Dazu kann die Einbettmasse beispielsweise mit einem Pinsel auf das Wachsmodell aufgetragen und diese so mit einer Primärschicht ummantelt werden. Um die endgültige Gußform herzustellen, kann das mit der eingetrockneten Primärschicht versehene Wachsmodell anschließend mit einer dann eine Sekundärschicht bildenden Gußeinbettmasse umgossen werden. Bei dieser Herstellungsweise der Gußform können für die Primärschicht eine Gußfeineinbettmasse und für die Sekundärschicht eine gewöhnliche Gußeinbettmasse verwendet werden. Ebenso ist es möglich, daß nur eine, dann aber sehr feine Einbettmasse verwendet wird.
   Die Einbettmasse weist in der Regel ein aus reaktivem Magnesiumoxid (MgO) und Monoammoniumphosphat (NH₄H₂PO₄) bestehendes Bindemittel auf, das zusammen mit einer Anmischflüssigkeit, beispielsweise Wasser oder einer Kieselsäuresol-Lösung, eine chemische Reaktion auslöst, wobei die beiden Komponenten Magnesiumoxid (MgO) und Monoammoniumphosphat (NH₄H₂PO₄) langsam in etwa zehn Minuten zur zementartigen Verbindung Magnesiumammoniumphosphat (MgNH₄PO₄· 6H₂O) reagieren, so daß die Einbettmasse zu einer sogenannten "grünen" Gußform aushärtet und eine abgebundene Keramikform entsteht.
3. Anschließend wird die sogenannte "grüne" Gußform bis auf etwa 950°C aufgeheizt, wobei das Wachs des Wachsmodells bei einer Temperatur von etwa 500°C aus der Gußform herausfließt, rückstandslos verbrennt und einen äußerst präzisen Hohlraum für das herzustellende Gußteil hinterläßt. Durch das Erhitzen der Gußform auf Temperaturen bis etwa 950°C erhält diese eine hinreichende Stabilität.
   In die so hergestellte Gußform wird bei einer definierten hohen Temperatur die beispielsweise durch Induktionsschmelzverfahren, Gasflammenerhitzung, Plasmaerhitzung oder dergleichen verflüssigte Metallegierung oder das verflüssigte, die spätere Glaskeramik bildende Glas eingebracht, beispielsweise durch Schleudern, Pressen oder dergleichen.
4. Anschließend wird die Gußform auf Raumtemperatur abgekühlt, wodurch das Gußobjekt erstarrt. Nach dem Erstarren wird die Gußform entfernt und man erhält das Gußobjekt.
   Durch physikalisch-chemische Umwandlungen dehnt sich die so hergestellte Gußform in den Verfahrensschritten 2 und 3 aus. Im zweiten Verfahrensschritt kommt es zur sogenannten Abbindeexpansion, die unter anderem von der Zusammensetzung der Einbettmasse und der Anmischflüssigkeit abhängt. Die Abbindeexpansionswerte, das heißt die Ausdehnung der Einbettmasse beim Abbinden in einer jeden Koordinatenrichtung, liegen in einer Größenordnung zwischen etwa 0,5 % bis 1,5 %. Im dritten Verfahrensschritt dehnt sich die Einbettmasse während der Erhitzung aufgrund der sogenannten thermischen Expansion aus. Die thermischen Expansionswerte, das heißt die Ausdehnung in einer jeden Koordinatenrichtung, sind anwendungsfallabhängig und liegen in einer Größenordnung zwischen etwa 0,8 % bis etwa 1,5 %.

Für die Herstellung filigraner Präzisionsgußteile ist eine gezielte Einstellung und Steuerung der Expansionswerte der Abbindeexpansion und der thermischen Expansion unbedingt geboten, insbesondere für medizinische Implantate. Beim Abkühlen der verwendeten biokompatiblen Materialien im vierten Verfahrensschritt schrumpfen diese beim Phasenwechsel von flüssig nach fest und ziehen sich im festen, also erstarrten Zustand zusammen. Im festen Zustand durchlaufen einige Materialien Umwandlungen, zum Beispiel Titan die β-Titan-/α-Titan-Umwandlung bei 882°C.

Die im vierten Verfahrensschritt beim Abkühlen auftretenden Schrumpfvorgänge überlagern sich mit den im zweiten und dritten Verfahrensschritt vorangegangenen Expansionsvorgängen. Durch die Schrumpfvorgänge und die Expansionsvorgänge entsteht ein Gußteil, das erhebliche Abweichungen von dem im ersten Verfahrensschritt hergestellten Wachsmodell des Abdrucks eines Körperteiles aufweist. Bereits bei Abweichungen von +/- 0,3 %, was einer relativen Längenänderung ΔL/L_{O} ≥ 30 µm/cm bei einem stabförmigen Ausgangsteil der Länge L_{O} entspricht, lassen sich die so hergestellten Implantate nicht mehr problemlos im menschlichen Körper einfügen. Paßungenaue Implantate haben für den Patienten anhaltende Schmerzen, Allergien, Gewebeveränderungen, Verformungen gesunder Knochengewebe, abnehmende Biokompatibilität, beispielsweise durch die Gefahr von Spannungsrißkorrosion, und Bruchgefahr zur Folge.

Für die Herstellung filigraner Präzisionsgußteile wäre es erforderlich, die beim Abkühlen auftretenden Schrumpfvorgänge durch die vorangegangenen Expansionsvorgänge zu kompensieren. Dazu ist eine genaue und gezielte Einstellung der Expansionswerte der Einbettmassen unerläßlich.

Bekannt und gebräuchlich sind quarzhaltige und quarzfreie Einbettmassen. EP-A-0417527 offenbart unter anderen Einbettmassen mit dem keramiksystem MgO-SiO₂-P₂O₅. JP-5700955 beschreibt die Verwendung von carbonsäuren in keramischen Einbettmassen. Die bisher gebräuchlichen quarzfreien Einbettmassen weisen äußerst niedrige thermische Ausdehnungskoeffizienten auf, die insbesondere für die Herstellung filigraner Präzisionsgußteile unakzeptabel sind und daher nicht zur Anwendung kommen.

Bei quarzhaltigen Einbettmassen ist eine gezielte und genaue Steuerung und Einstellung der Expansionsvorgänge durch die thermischen sprunghaften Umwandlungen von SiO₂-Modifikationen herzustellen. Die thermische Expansion beruht auf dem Umwandlungsverhalten der Siliziumdioxid-(SiO₂)-Modifikationen Cristobalit und Quarz. Durch α/β-Umwandlung dehnen sich bei Erwärmung Cristobalit bei etwa 270°C und Quarz bei etwa 570°C sprunghaft aus. Bei Abkühlung ist ein umgekehrtes Verhalten, das heißt ein plötzliches Schrumpfen bei etwa 270°C bzw. 570°C gegeben. Durch sprunghafte Ausdehnungen beim Erhitzen werden thermische Expansionswerte von 1 % bis 1,5 % erzielt.

Darüber hinaus sind quarzhaltige Einbettmassen für die Herstellung von Präzisionsgußteilen aus Titan (Ti), Zirkonium (Zr) oder Titan-(Ti)- bzw. Zirkonium-(Zr)-Legierungen ungeeignet, da die Einbettmassen der keramischen Gußform bei den beim Vergießen der Metalle bzw. deren Legierungen gegebenen Gießtemperaturen von 1.650°C bis 1.800°C mit den flüssigen Metallen bzw. deren Legierungen reagieren. Die Metalle bzw. deren Legierungen nehmen aufgrund zahlreicher chemischer Reaktionen an der Phasengrenze zwischen der keramischen Gußform und den flüssigen Metallen Sauerstoff aus dem Siliziumdioxid (SiO₂) auf, der zu Versprödungen der Metalle an der Oberfläche, "Alpha-case"-Bildung genannt, sowie zu einem Verlust der hohen Korrosionsbeständigkeit der Metalle führen. Dadurch sind so hergestellte Feingußteile unbrauchbar, da deren Oberfläche durch die Versprödung durch Beizen oder Schleifen nachbearbeitet bzw. abgearbeitet werden müßte. Im Bereich der Medizintechnik würden so jedoch die Feingußteile unakzeptabel in ihren Geometrien verändert. Bei dünnen Teilen, wie sie beispielsweise im Bereich der Dentaltechnik vorkommen, und wo die Wandstärke nur einige Millimeter beträgt, könnte die abzuarbeitende Schicht die Stärke des Gußteils besitzen, was alle dentaltechnischen Arbeiten ausschließen würde.

Ein weiterer Nachteil der quarzhaltigen Einbettmassen ist in den niedrigen Erweichungstemperaturen derselben gegeben, die in einem Temperaturbereich zwischen 1.200°C und 1.300°C liegen. Beim Vergießen von Metallen bzw. Metallegierungen mit hohen Schmelztemperaturen, wie beispielsweise Titan (Ti) bzw. dessen Legierungen, die Gießtemperaturen von etwa 1.650°C bis 1.800°C aufweisen, treten somit zusätzliche thermische Instabilitäten auf, die Verschlackungsreaktionen und Paßungenauigkeiten mit sich bringen.

Ein weiterer nicht zu vernachlässigender Nachteil ist in der Tatsache zu sehen, daß in der Praxis im Umgang mit quarzhaltigen Keramikmassen, insbesondere bei der thermischen Behandlung der Gußformen und deren Handhabung Fein-und Feinststäube mit Partikelgrößen unter 5 µm entstehen. Die bei den entsprechenden Arbeitsprozessen unmittelbar vom Menschen eingeatmeten Stäube, insbesondere Feinstäube mit einer Korngröße < 10 µm stellen einen Risikofaktor und ein medizinisches Problem dar, da die Stäube von den Filtereinrichtungen der menschlichen Atemwege nur unzureichend zurückgehalten werden, in die Lunge gelangen, sich dort für längere Zeit festsetzen und so zu verschiedenen Funktionsstörungen der Lunge, insbesondere zu Staubinhalationskrankheiten, führen können. Aus diesem Grund ist die zulässige Grenzkonzentration für staubbelastete Arbeitsplätze gesetzlich festgelegt. Für die oben erwähnten Feinstäube ist in der Bundesrepublik Deutschland ein MAK-Wert (Maximale Arbeitsplatzkonzentration) in Höhe von 0,15 mg/m³ Atemluft vorgeschrieben.

Der vorliegenden Erfindung liegt demgemäß die **Aufgabe** zugrunde, ein Verfahren anzugeben, mit welchem sich die Expansion von keramischen Einbettmassen gezielt einstellen und steuern läßt, insbesondere in Abhängigkeit der jeweils zu vergießenden Materialien und des jeweiligen Verarbeitungsprozesses.

Zur technischen **Lösung** wird ein Verfahren gemäß Anspruch 1.

Da quarzhaltige Einbettmassen keine gleichmäßige Expansion, das heißt insbesondere kein gleichmäßiges lineares Ausdehnungsverhalten aufweisen, werden bei dem erfindungsgemäßen Verfahren quarzfreie keramische Einbettmassen verwendet, deren Expansion mit dem Verfahren gezielt und genau gesteuert und eingestellt wird. Quarzfreie Einbettmassen weisen eine gleichmäßige Expansion auf, das heißt sie besitzen einen nahezu konstanten linearen Ausdehnungskoeffizienten. Durch dieses nahezu lineare Expansionsverhalten ist die Möglichkeit einer genauen, gezielten und im wesentlichen voraussagbaren Beeinflussung der Expansion gegeben.

Mit dem erfindungsgemäßen Verfahren läßt sich somit die Expansion von quarzfreien keramischen Einbettmassen durch Zusatz einer organischen Säure genau steuern und durch den Anteil des Magnesiumoxids (MgO) in der Oxidkeramikmischung der Einbettmasse und dem Anteil der Säure an der Einbettmasse gezielt einstellen. Die Auswahl der Säure und der Anteil des Magnesiumoxids (MgO) in der Oxidkeramikmischung und der Anteil der Säure in der Einbettmasse sind dabei in Abhängigkeit der später jeweils zu verarbeitenden Materialien und des dabei zum Einsatz kommenden Prozesses auswählbar und auf diese abstimmbar.

Eine weitere besonders vorteilhafte Ausgestaltung sieht vor, daß die Säure ein fester Stoff ist. Dadurch kann die Säure besonders einfach der Einbettmasse zugemischt werden. Gemäß einem weiteren vorteilhaften Vorschlag der Erfindung ist die Säure beim Erhitzen rückstandslos abbaubar. Vorteilhafterweise ist die Säure gut wasserlöslich. Dadurch wird gewährleistet, daß sich die Säure gleichmäßig in der Einbettmasse verteilt und reagieren kann.

Gemäß einem besonders vorteilhaften Vorschlag der Erfindung ist die Säure eine polare mehrwertige Di- und/oder Tricarbonsäure der chemischen Formel R(COOH)_{X} mit X = 2, 3. Beispiele hierfür sind die folgenden Dicarbon- und Tricarbonsäuren:
- Oxalsäure ((COOH)₂)
- Weinsäure (HOOC-(CHOH)₂-COOH)
- Zitronensäure (HOOC-CH₂-C(OH)-(COOH)-CH₂-COOH)
- Apfelsäure (HOOC-CH₂-CH(OH)-COOH)
- Malonsäure (HOOC-CH₂-COOH)
- Maleinsäure (HOOC-CH₂=CH₂-COOH)

Derartige Säuren können als feste Stoffe den Einbettmassen zugemischt werden, sind sehr gut wasserlöslich und können beim Erhitzen rückstandsfrei abgebaut werden.

Die Säuren reagieren beim Anmischen mit dem Magnesiumoxid (MgO) und bilden in einem ersten Schritt gut wasserlösliche Magnesiumsalze. Im Augenblick des Anmischens wird der pH-Wert auf Werte unter 2 abgesenkt. Bei der Bildung der Magnesiumsalze aus dem Magnesiumoxid (MgO) durch die Säure/Base-Reaktion wird die Oberfläche des reagierenden Magnesiumoxid-Partikels aktiviert. Da in der Einbettmasse bezogen auf das Monoammoniumphosphat (NH₄H₂PO₄) überstöchiometrischer Magnesiumoxidanteil vorhanden ist, bilden sich Hydrolysate aus Mg(OH)₂/(Brucit) und den Magnesiumsalzen der organischen Säuren. Diese Hydrolysate besitzen ein hohes Eigenvolumen. Hierdurch entsteht beim Abbindevorgang eine starke Expansion mit Werten von bis zu 3 %.

Vorteilhafterweise macht die Säure bis zu 2 Gew.-% aus. Gemäß einem vorteilhaften Vorschlag der Erfindung weist die Oxidkeramikmischung als Hauptkomponente Oxide mit einer hohen thermischen und chemischen Stabilität auf. Die Oxidkomponenten der Keramikmischung sind also vorteilhafterweise hochschmelzend und verhalten sich thermochemisch im wesentlichen inert. Dadurch ist die Gefahr von Verschlackungsreaktionen gering und die Beständigkeit von mit verfahrensgemäßen Einbettmassen hergestellten Gußformen, insbesondere gegenüber quarzhaltigen keramischen Einbettmassen, verbessert.

Gemäß der Erfindung besteht die Oxidkeramikmischung aus Magnesiumoxid (MgO), Zirkoniumdioxid (ZrO₂) und Aluminiumoxid (Al₂O₃). Hierbei können auch unstabilisierte Zirkoniumdioxide (ZrO₂) und Korund (α-Al₂O₃) verwendet werden. Derartige Oxidkeramikmischungen aus den Komponenten MgO-ZrO₂-Al₂O₃ weisen in der Regel äußerst geringe thermische Expansionswerte auf. Die thermische Expansion liegt für solche Mischungen beispielsweise bezogen auf 900°C zwischen Werten von 0,2 % bis 0,6 %. Derart niedrige thermische Expansionswerte sind für die Herstellung filigraner Präzisionsgußteile normalerweise unzureichend. Durch die erfindungsgemäßen Zusätze und deren Anteile an der Einbettmasse lassen sich die Abbindeexpansionswerte des Keramiksystems vergrößern und so Paßungenauigkeiten bei der Fertigung von filigranen Präzisionsgußteilen verhindern. Die Komponenten des Keramiksystems MgO-ZrO₂-Al₂O₃ weisen alle große thermische und chemische Stabilitäten auf, so daß die Tendenzen zur Verschlackung äußerst gering sind. Im Vergleich zu quarzhaltigen Einbettmassen sind die Komponenten des Keramiksystems MgO-ZrO₂-Al₂O₃ gegenüber stark reduzierenden flüssigen Metallen oder Metallegierungen, insbesondere auf der Basis von Titan (Ti) oder Zirkonium (Zr), wesentlich beständiger und besonders für Titan (Ti)-Feinguß geeignet.

Gemäß einem vorteilhaften Vorschlag der Erfindung macht der Anteil des Magnesiumoxids (MgO) in der Oxidkeramikmischung bis zu 20 Gew.-% aus. Vorteilhafterweise macht der Anteil des Magnesiumoxids (MgO) in der Oxidkeramikmischung 5 Gew.-% bis 10 Gew.-% aus.

Gemäß einem weiteren vorteilhaften Vorschlag der Erfindung werden für die Oxidkeramikmischung Magnesiumoxid (MgO) mit einer mittleren Korngröße von etwa 20 µm bis 120 µm, vorzugsweise von etwa 80 µm, Zirkoniumdioxid (ZrO₂) mit einer mittleren Korngröße von etwa 20 µm bis 120 µm, vorzugsweise von etwa 40 µm und Aluminiumoxid (Al₂O₃) mit einer mittleren Korngröße von etwa 20 µm bis 200 µm, vorzugsweise von etwa 110 µm verwendet.

Gemäß einem vorteilhaften Vorschlag der Erfindung macht der Anteil des Monoammoniumphosphats (NH₄H₂PO₄) bezogen auf die Oxidkeramikmischung etwa 5 % bis 15 % aus. Beim Abbindevorgang wird das Monoammoniumphosphat (NH₄H₂PO₄) zur Verbindung Mg₂P₂O₇ = MgO · P₂O₅ umgewandelt. Die Komponente P₂O₅ ist gegenüber flüssigen Metallen instabil. Durch Bildung der thermochemisch stabilisierten Verbindung Mg₂P₂O₇ wird die Komponente P₂O₅ bei einem Schmelzpunkt von etwa 1.400°C umgewandelt, wobei die thermodynamische Aktivität der P₂O₅-Komponente stark herabgesetzt wird. Durch den geringen Anteil von Monoammoniumphosphat (NH₄H₂PO₄) in der Einbettmasse wird gewährleistet, daß der P₂O₅-Anteil nach der thermischen Behandlung weniger als 3 % ausmacht. Im Bereich der Feingußtechnik auf der Basis von Titan (Ti) oder Titan (Ti)-Legierungen ist dies besonders wesentlich, da Titan (Ti) stark reduzierend ist.

Gemäß einem weiteren Vorschlag der Erfindung ist die Anmischflüssigkeit eine Kieselsäuresol-Lösung, vorteilhafterweise bis zu 40 %ige Kieselsäuresol-Lösung. Vorteilhafterweise werden auf 100 g Einbettmasse 15 ml bis 40 ml, vorzugsweise 20 ml Anmischflüssigkeit verwendet.

Gemäß einem besonders vorteilhaften Vorschlag der Erfindung wird eine verfahrensgemäße Einbettmasse zum Herstellen von Gußformen für Präzisionsgußteile aus Metallen oder deren Legierungen, insbesondere auf der Basis von Titan (Ti), Gold (Au), Palladium (Pd), Nickel-Chrom (Ni-Cr) und Cobalt-Chrom (Co-Cr) und/oder glaskeramischen Werkstoffen insbesondere in der Medizintechnik und dabei insbesondere in der Dentaltechnik verwendet.

Weitere Vorteile und Merkmale der Erfindung werden anhand der folgenden Beispiele und im Zusammenhang mit den folgenden Figuren näher erläutert, ohne diese darauf zu beschränken. Dabei zeigen:
- Fig. 1: die thermische Expansion einer im Stand der Technik bekannten quarzhaltigen Einbettmasse;
- Fig. 2: die thermische Expansion einer quarzfreien Einbettmasse;

- Fig. 3: die Abbindeexpansion einer quarzfreien Einbettmasse in Abhängigkeit des Anteils des Magnesiumoxids in der Oxidkeramikmischung und
- Fig. 4: die Abbindeexpansion einer quarzfreien Einbettmasse in Abhängigkeit verschiedener organischer Säuren.

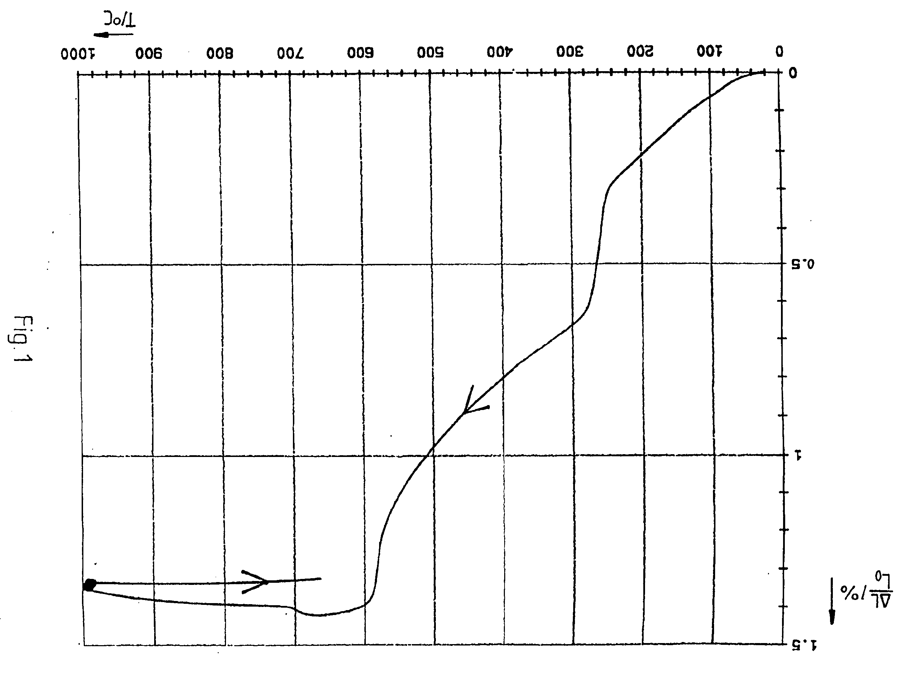

Fig. 1 zeigt die Dilatometerkurve einer quarzhaltigen Einbettmasse, das heißt die mit einer Temperaturerhöhung verbundene Volumenvergrößerung der Einbettmasse. Hier ist die prozentuale relative Längenänderung ΔL/L₀ eines Gußteiles in Abhängigkeit der Temperatur T in °C dargestellt. Bei der quarzhaltigen Einbettmasse handelt es sich um mit MgO/NH₄H₂PO₄-Binder gebundenes und mit einer 40 %igen Kieselsolsäure-Lösung angemischtes α-Cristobalit und α-Quarz. Anhand der in Fig. 1 dargestellten Aufheizkurve der quarzhaltigen Einbettmasse mit einem Temperaturanstieg von Raumtemperatur bis 1.000°C und einem Haltepunkt von 30 Minuten bei 1.000°C ist zu erkennen, daß bei einer Temperatur von etwa 270°C aufgrund der Umwandlung des Cristobalits eine starke sprunghafte Ausdehnung von etwa 0,5 % gegeben ist. Desweiteren ist zu erkennen, daß sich die Einbettmasse bei einer Temperatur von etwa 570°C aufgrund der Quarz-Umwandlung nochmals sprunghaft um etwa 0,3 % ausdehnt. Im Temperaturbereich oberhalb von 600°C bis 1000°C ist die lineare Längenänderung ΔL ≈ 0. Die quarzhaltigen Einbettmassen weisen somit kein gleichmäßiges Ausdehnungsverhalten auf.

Damit unterscheidet sich das Ausdehnungsverhalten der Materialien der herzustellenden Gußobjekte von dem Ausdehnungsverhalten der mit entsprechenden Einbettmassen hergestellten Gußformen. Die Folge ist, daß insbesondere größere Gußobjekte, zum Beispiel im Dentalbereich mehrgliedrige Brücken, beim Abkühlen in einem Temperaturbereich zwischen 600°C bis 1000°C plastischen Verformungen unterliegen, die in einem Temperaturbereich unterhalb von etwa 400°C nicht wieder aufgehoben werden können, da das Gußobjekt dann auf Längenänderungen überwiegend elastisch reagiert. Im Temperaturbereich zwischen 1000°C und 600°C sind Differenzen zwischen dem ΔL₁ der quarzhaltigen Einbettmasse mit ΔL₁ ≈ 0 einerseits und dem ΔL₂ der erstarrten Legierung des Gußobjektes mit ΔL₂ = 0,5 % bis 0,7 % gegeben, so daß im Gußobjekt eine Dehnung in der Größenordnung Δ (ΔL) = ΔL₂ - ΔL₁ ≈ 0,5 % bis 0,7 % entsteht, die nur durch plastische Verformungen und teilweise durch Zugspannungen aufgefangen, das heißt kompensiert werden können. Beim Ausbetten der Gußteile, insbesondere größerer filigraner Gußteile aus der abgekühlten Gußform, unterliegen die Gußteile Verwerfungen, die zu unakzeptablen Paßungenauigkeiten führen können. Bei der Herstellung von glaskeramischen Präzisionsgußteilen reagieren diese bei derartigen Ausdehnungsunterschieden im spröden Bereich mit Bruch.

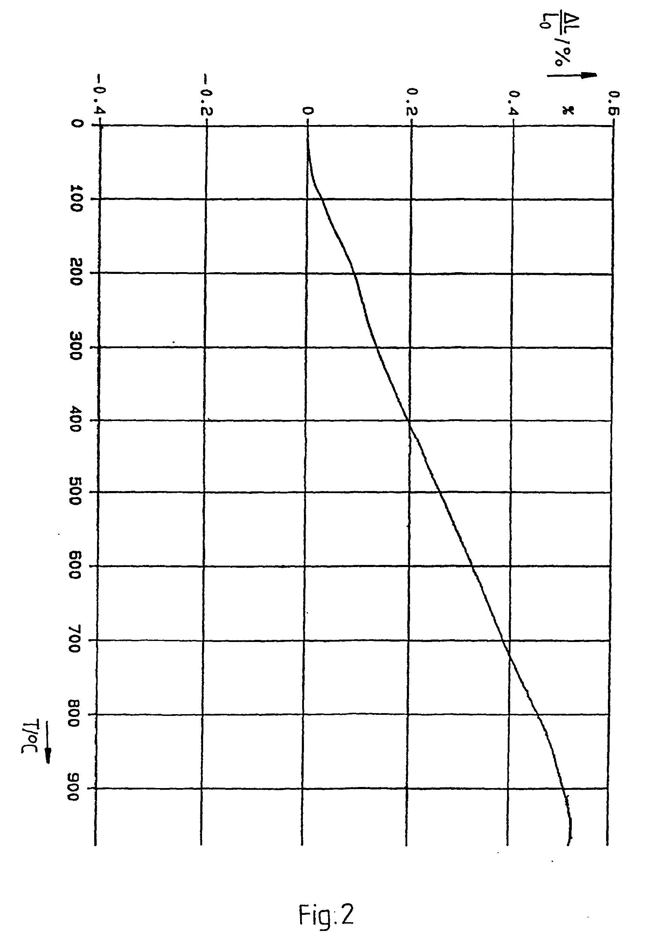

Fig. 2 zeigt die thermische Expansion einer quarzfreien Einbettmasse, bestehend aus einer Oxidkeramikmischung aus 45 % unstabilisierten ZrO₂, 43 % α-Al₂O₃ und 7 % MgO, einem Anteil von 5 % des Binders NH₄H₂PO₄ und einer 40 %igen Kieselsolsäure-Lösung, von der auf 100 g Einbettmasse 20 ml verwendet wurden. Für die Oxidkeramikmischung wurde MgO mit einer mittleren Korngröße von 80 µm, unstabilisiertes ZrO₂ mit einer mittleren Korngröße von 40 µm und α-Al₂O₃ mit einer mittleren Korngröße von 110 µm verwendet.

Wie anhand der in Fig. 2 dargestellten Dialometerkurve dieser Einbettmasse zu erkennen ist, dehnt sich diese bei einer Erwärmung nahezu gleichmäßig und linear aus. Die prozentuale relative Längenänderung liegt im entsprechenden Temperaturbereich zwischen Werten von 0,3 % bis maximal 0,7 % und ist damit zum Herstellen genauer Präzisionsgußteile äußerst gering. Es ist also erforderlich, bei diesen quarzfreien Keramikmassen eine äußerst hohe Expansion, nach Möglichkeit > 1 %, zu erzielen.

Eine Erhöhung der Expansion ist mit dem erfindungsgemäßen Verfahren gegeben, wie anhand der folgenden Beispiele ersichtlich ist.

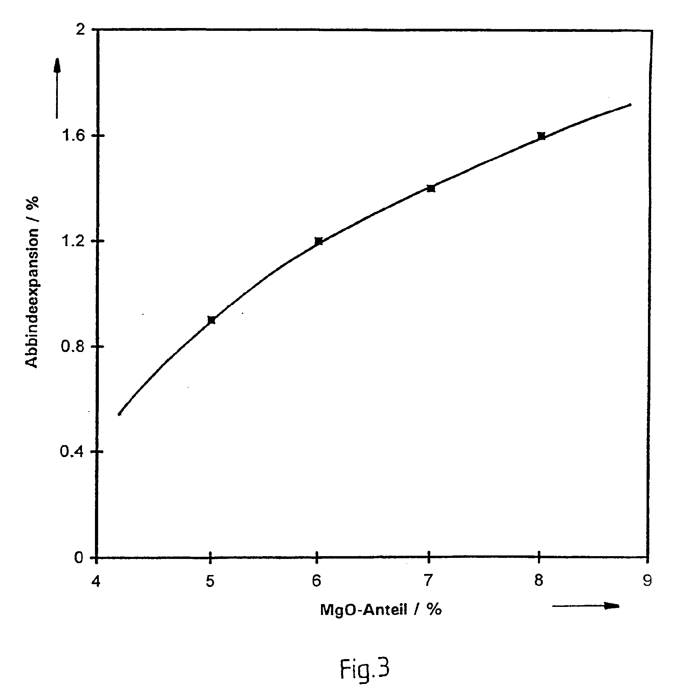

Fig. 3 zeigt den Einfluß des Anteils des Magnesiumoxids (MgO) auf die Abbindeexpansion bei einer Oxidkeramikmischung mit einem konstanten Verhältnis von ZrO₂ zu α-Al₂O₃ in einer Größe von 48 %/45 %, einem Bindemittel mit einem bezogen auf die Oxidkeramikmischung 5 %igen Anteil an NH₄H₂PO₄, einem Zusatz von 0,5 % Zitronensäure als organische Säure und einer 40 %igen Kieselsäuresol-Lösung, wobei für 100 g Einbettmasse 20 ml verwendet wurden. Das Massenverhältnis 48 % ZrO₂/45 % α-Al₂O₃ wurde konstant gehalten. Wie anhand der in Fig. 3 dargestellten Kurve zu erkennen ist, nimmt die Abbindeexpansion mit zunehmendem Magnesiumoxidanteil zu, wobei bei einem Anteil von 7 % bis 8 % des Magnesiumoxids ein im wesentlichen linearer Anstieg der Abbindeexpansion zu verzeichnen ist.

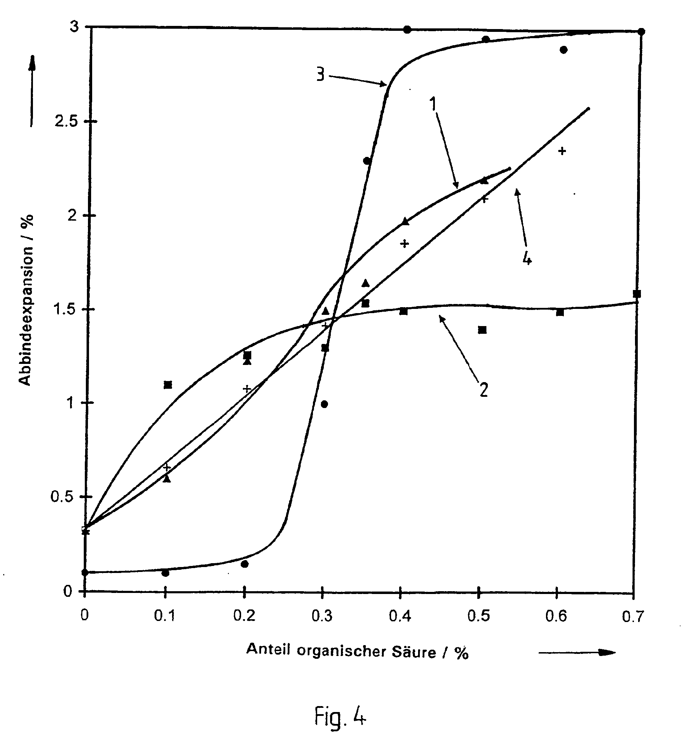

Fig. 4 zeigt die Abhängigkeit der Abbindeexpansion von dem der Einbettmasse jeweils zugeführten Anteil der organischen Säure. Dabei sind in Fig. 4 Kurven 1 bis 4 für verschiedene Keramikmischungen und Säuren dargestellt. Für alle Einbettmassen wurden auf 100 g Einbettmasse 20 ml einer 40 %igen Kieselsäuresol-Lösung als Anmischflüssigkeit verwendet. Die Oxidkeramikmischung wurde mit unterschiedlichen Magnesiumoxidanteilen, aber stets mit einem festen Verhältnis von unstabilisiertem ZrO₂/α-Al₂O₃ verwendet, das heißt, das Massenverhältnis von unstabilisiertem ZrO₂/α-Al₂O₃ war gleich 48 %/45 % und wurde konstant gehalten.

Die mit 1 gekennzeichnete Kurve wurde bei einem Anteil von 7 % Magnesiumoxid und einem ständig ansteigenden Anteil an Oxalsäure-Dihydrat aufgenommen.

Die mit 2 gekennzeichnete Kurve wurde ebenfalls bei einem MgO-Anteil von 7 %, aber bei einem ständig ansteigenden Anteil von Zitronensäure aufgenommen.

Kurve 3 wurde bei einem 15 %igen Anteil von MgO und einem ständig ansteigenden Anteil an Zitronensäure aufgenommen. Das Verhältnis ZrO₂ zu α-Al₂O₃ wurde konstant auf 48 % - ZrO₂/45 % - α-Al₂O₃ gehalten.

Kurve 4 zeigt den Verlauf der Abbindeexpansion bei Verwendung eines 7 %igen MgO-Anteils mit einem kontinuierlich zunehmenden Anteil an Weinsäure.

Anhand der in den Kurven 1 bis 4 der Fig. 4 dargestellten Untersuchungsergebnisse kann festgestellt werden, daß Zitronensäure in Verbindung mit einem Anteil von 15 % MgO bei einem Anteil der Zitronensäure von mehr als 0,4 % eine Abbindeexpansion von nahezu 3 % verursacht.

Wie anhand der Kurve 3 in Fig. 4 zu erkennen ist, erfolgt die Zunahme der Abbindeexpansion bei einer derartigen Mischung in einem Anteilsbereich der Zitronensäure zwischen etwa 0,2 % und 0,3 % sprunghaft. Unterhalb eines Anteils von 0,2 % ist der Einfluß der Zitronensäure auf die Abbindeexpansion sehr gering und nahezu wirkungslos.

Bei einem MgO-Anteil von 7 % ist der Anstieg der Abbindeexpansion bei Verwendung von Zitronensäure nicht mehr so sprunghaft, wie anhand der in Fig. 4 mit 2 gekennzeichneten Kurve zu erkennen ist. Ab einem Anteil an Zitronensäure von etwa 0,3 % verhält sich die Abbindeexpansion nahezu konstant und nimmt einen Wert von etwa 1,45 % ein.

Bei der Verwendung von Oxalsäure und Weinsäure weist die Abbindeexpansion einen nahezu linearen Anstieg auf. Bei beiden Säuren sind bei einem Anteil von 0,4 % der Säuren in einer Einbettmasse mit einem MgO-Anteil von 7 % Abbindeexpansionswerte von 1,7 % bis 1,9 % gegeben.

Ein ähnliches Verhalten weisen die hier nicht dargestellten übrigen Carbonsäuren wie Apfelsäure, Malonsäure und Maleinsäure auf.

### Beispiel 1

Es wurde eine Einbettmasse aus den folgenden Bestandteilen zusammengesetzt:
- Oxidkeramikmischung:: 7 % MgO
48 % unstabilisiertes ZrO₂
45 % α-Al₂O₃
- Bindemittel:: mit einem bezogen auf die Oxidkeramikmischung 5 %igen Anteil von NH₄H₂PO₄
- organische Säure:: 0,4 % Oxalsäure-Dihydrat
- Anmischflüssigkeit:: 40 %ige Kieselsolsäure-Lösung; 20 ml für 100 g Einbettmasse

Bei einer Temperaturänderung von 850°C bezogen auf die Vorwärmtemperatur der Gußform wurde eine thermische Expansion von 0,45 % und eine Abbindeexpansion von 1,9 %, insgesamt also eine Expansion von 2,35 % erzielt. Dieser Expansionswert ist für die Herstellung von CoCr-Gußlegierungsteilen, insbesondere für zahnmedizinische Zwecke, bestens geeignet. Zur Herstellung einer mehrgliedrigen Brücke wurden mit einer Legierung von 28 % Cr, 6 % Mo, 0,7 % Si, 0,7 % Mn, 0,15 % C und 64,75 % mit einem Induktionsofen in einem Schleudergußverfahren unter Luft verschiedene Versuche durchgeführt, wobei eine nahezu 100 %ige Paßgenauigkeit der so hergestellten Gußobjekte erzielt wurde. Die relative Längenänderung ΔL/L₀ lag unter 20 µm/cm. Das so hergestellte Gußobjekt stimmte vollständig mit dem Ausgangsmodell überein.

### Beispiel 2

Unter den gleichen Bedingungen wie in Beispiel 1 wurde eine Einbettmasse mit den folgenden Bestandteilen zusammengesetzt:
- Oxidkeramikmischung:: 8 % MgO
48 % unstabilisiertes ZrO₂
44 % α-Al₂O₃
- Bindemittel:: mit einem bezogen auf die Oxidkeramikmischung 5 %igen Anteil von NH₄H₂PO₄
- organische Säure:: 0,5 % Zitronensäure
- Anmischflüssigkeit:: 40 %ige Kieselsolsäure-Lösung; 20 ml für 100 g Einbettmasse

Bei dieser Einbettmasse wurde bei einer Temperaturänderung von 900°C bezogen auf die Vorwärmetemperatur der Gußform eine Gesamtexpansion von 2,15 % erzielt. Eine mit dieser Einbettmasse gefertigte Gußform wurde zur zusätzlichen Stabilisierung gegenüber Titan (Ti) mit einer Beschichtung aus La₂O₃ versehen, wie es aus der europäischen Patentanmeldung EP 97 10 9813.2 der Anmelderin bekannt ist.

Anschließend wurden Präzisionsgußteile für medizinische Zwecke, nämlich Gaumenplatten, chirurgische Klammern und chirurgische Nägel, mit Wandstärken und Durchmesser von 1 mm bis 3 mm aus Titan bei einer Temperatur von etwa 900°C gefertigt. Diese waren "Alpha-case"-frei, das heißt sie wiesen keine Verschlackungs- oder Versprödungserscheinungen auf. Die Gußteile wurden mit einem Induktionsofen in einem Schleudergußverfahren in einer 99,999 %igen Argonatmosphäre gegossen. Das zum Gießen verwendete Titan besaß eine Reinheit von 99,4 % mit den Restgehalten Stickstoff (N), Sauerstoff (O) und Kohlenstoff (C) und hatte eine Oberflächenhärte bzw. Mikro-Vickershärte von HV 0,05 = 170.

Die relativen linearen Abweichungen ΔL/L₀ des Gußteils vom Originalteil lagen unter 20 µm/cm.

Die fertigen Titan-Gußteile wiesen eine Oberflächenhärte zwischen HV 0,05 = 220 und 260 auf. Eine "Alpha-case"-Bildung war nicht festzustellen.

### Beispiel 3

Es wurde eine Einbettmasse aus den folgenden Bestandteilen zusammengesetzt:
- Oxidkeramikmischung:: 13 % MgO
42 % unstabilisiertes ZrO₂
45 % α-Al₂O₃
- Bindemittel:: mit einem bezogen auf die Oxidkeramikmischung 5 %igen Anteil von NH₄H₂PO₄
- organische Säure:: 0,5 % Zitronensäure
- Anmischflüssigkeit:: 40 %ige Kieselsolsäure-Lösung; 20 ml für 100 g Einbettmasse

Bei dieser Zusammensetzung wurde eine Abbindeexpansion von 2,7 % erzielt, wie anhand der in Fig. 3 mit 3 gekennzeichneten Kurve zu erkennen ist.

Eine aus dieser Einbettmasse hergestellte Gußform wurde bei etwa 1.000°C 30 Minuten lang geglüht. Anschließend wurde die Form gesintert, wodurch sich diese um etwa 0,4 % zusammenzog. Schließlich wurde die Form auf Raumtemperatur abgekühlt, so daß letztlich die gesamte Expansion der Gußform bei etwa 2,3 % lag.

Zur Herstellung von Brücken und chirurgischen Klammern und Nägeln wurde in die Gußform bei Raumtemperatur flüssiges Titan mit einer Reinheit von 99,4 % gegossen, wobei hier ebenfalls - wie bei Beispiel 2 - in einem Induktionsofen ein Schleudergußverfahren in einer 99,999 %igen Argonatmosphäre angewendet wurde. Die so hergestellten Gußteile wiesen lineare Abweichungen ΔL/L₀ des Gußteils vom Originalteil von etwa 20 µm/cm bis 30 µm/cm auf. Die Oberflächenhärte der Titan-Gußteile lag nach dem Gießen etwa zwischen HV 0,05 = 210 bis 260. Es wurde keine "Alpha-case"-Bildung festgestellt.

### Bezugszeichenliste

- 1: Oxalsäure-Dihydrat bei einem MgO-Anteil von 7 %
- 2: Zitronensäure bei einem MgO-Anteil von 7 %
- 3: Zitronensäure bei einem MgO-Anteil von 15 %
- 4: Weinsäure bei einem MgO-Anteil von 7 %

## Patentansprüche

1. Verfahren zur Herstellung von Feingussteilen für medizinische Zwecke, bei dem ein Wachsmodell in eine keramische aus Magnesiumoxid, Zirkoniumdioxid und Aluminiumoxid bestehenden Oxidkeramikmischung, einem auf Magnesiumoxid und Monoammoniumphosphat basierenden Bindemittel und einer Anmischflüssigkeit gebildeten quarzfreien Einbettmasse zur Anfertigung einer Gussform eingebettet wird, wobei anschließend durch Aufheizen unter Verfestigung der Gussform der Wachs entfernt wird und sodann der Gießvorgang unter Einbringung von Metallen, deren legierungen oder von flüssigem Glas des späteren glaskeramischen Werkstoffes als Gussmaterial durchgeführt wird, nach dessen Erstarrung das Feingussteil aus der Gussform entformbar ist,
**dadurch gekennzeichnet,**
**dass** der Einbettmasse zur Steuerung und Einstellung der Expansion wenigstens eine organische Säure zugeführt wird.

2. Verfahren nach Anspruch 1, **dadurch gekennzeichnet, dass** die Säure ein fester Stoff ist.

3. Verfahren nach einem oder mehreren der Ansprüche 1 und 2, **dadurch gekennzeichnet, dass** die Säure eine polare, mehrwertige Di- und/oder Tricarbonsäure der chemischen Formel R(COOH)ₓ, mit R = organisches Restmolekül und X = 2, 3 ist.

4. Verfahren nach einem oder mehreren der Ansprüche 1 bis 3, **dadurch gekennzeichnet, dass** der Anteil des Magnesiumoxids (MgO) in der Oxidkeramikmischung bis zu 20 Gew.-% ausmacht.

5. Verfahren nach einem oder mehreren der Ansprüche 1 bis 4, **dadurch gekennzeichnet, dass** der Anteil des Magnesiumoxids (MgO) in der Oxidkeramikmischung 5 Gew.-% bis 10 Gew.-% ausmacht.

6. Verfahren nach einem oder mehreren der Ansprüche 1 bis 5, **dadurch gekennzeichnet, dass** Magnesiumoxid und Zirkoniumdioxid mit einer mittleren Korngröße von etwa 20 µm bis 120 µm und Aluminiumoxid mit einer mittleren Korngröße von etwa 20 µm bis 200 µm verwendet wird.

7. Verfahren nach einem oder mehreren der Ansprüche 1 bis 6, **dadurch gekennzeichnet, dass** der Anteil des Monoammoniumphosphats (NH₄H₂PO₄) des Bindemittels bezogen auf die Oxidkeramikmischung etwa 5 Gew.-% bis 15 Gew.-% ausmacht.

8. Verfahren nach einem oder mehreren der Ansprüche 1 bis 7, **dadurch gekennzeichnet, dass** die Anmischflüssigkeit eine Kieselsäuresollösung ist.

9. Verfahren nach einem oder mehreren der Ansprüche 1 bis 8, **dadurch gekennzeichnet, dass** auf 100 g Einbettmasse bis zu 40 ml Anmischflüssigkeit verwendet werden.

## Claims

1. A method of producing high quality cast components for medical purposes, in which a wax model is embedded in a ceramic quartz-free embedding composition constituted by a ceramic oxide mixture, which consists of magnesium oxide, zirconium oxide and aluminium oxide, a bonding agent based on magnesium oxide and monoammonium phosphate and a mixing liquid to make a mould, wherein the wax is subsequently removed by heating whilst solidifying the mould and the casting process is then performed by introducing metals, alloys thereof or of molten glass of the later glass ceramic material constituting casting material, after the solidification of which the high quality cast component is removable from the mould, **characterised in that** at least one organic acid is added to the embedding composition in order to control and adjust the expansion.

2. A method as claimed in claim 1, **characterised in that** the acid is a solid material.

3. A method as claimed in one or more of claims 1 and 2, **characterised in that** the acid is a polar, multivalent dicarbonic and/or tricarbonic acid of chemical formula R(COOH)ₓ, where R = organic residual molecule and X = 2, 3.

4. A method as claimed in one or more of claims 1 to 3, **characterised in that** the proportion of the magnesium oxide (MgO) in the ceramic oxide mixture is up to 20% wt.

5. A method as claimed in one or more of claims 1 to 4, **characterised in that** the proportion of the magnesium oxide (MgO) in the ceramic oxide mixture is 5%wt. to 10%wt.

6. A method as claimed in one or more of claims 1 to 5, **characterised in that** magnesium oxide and zirconium oxide with a mean grain size of about 20 µm to 120 µm and aluminium oxide with a mean grain size of about 20 µm to about 200 µm is used.

7. A method as claimed in one or more of claims 1 to 6, **characterised in that** the proportion of the monoammonium phosphate (NH₄H₂PO₄) in the bonding agent is about 5%wt. to 15%wt. with respect to the ceramic oxide mixture.

8. A method as claimed in one or more of claims 1 to 7, **characterised in that** the mixing liquid is a silicic acid solution.

9. A method as claimed in one or more of claims 1 to 8, **characterised in that** up to 40 ml mixing liquid is used for 100 g embedding composition.

## Revendications

1. Procédé pour la fabrication de pièces en fonte de précision pour applications médicales, dans lequel un modèle en cire est inclus dans une masse d'enrobage céramique sans quartz composée d'un mélange d'oxydes céramiques composé d'oxyde de magnésium, d'oxyde de zirconium et d'oxyde d'aluminium, d'un liant à base d'oxyde de magnésium et de monophosphate d'ammonium et d'un liquide d'addition pour la fabrication d'un moule de coulée, dans lequel la cire est ensuite éliminée par chauffage tandis que le moule de coulée est solidifié et l'opération de coulée est ensuite réalisée en introduisant des métaux, des alliages de ceux-ci ou du verre liquide pour le futur matériau vitrocéramique, servant de matériau de coulée, après le refroidissement desquels la pièce en fonte de précision peut être démoulée, **caractérisé en ce que** la masse d'enrobage est additionnée d'au moins un acide organique afin de contrôler et d'ajuster son expansion.

2. Procédé selon la revendication 1, **caractérisé en ce que** l'acide est une matière solide.

3. Procédé selon au moins l'une des revendications 1 et 2, **caractérisé en ce que** l'acide est un acide di- ou tricarboxylique selon la formule chimique R(COOH)ₓ, où R = molécule de résidu organique et X = 2, 3.

4. Procédé selon une ou plusieurs des revendications 1 à 3, **caractérisé en ce que** la proportion d'oxyde de magnésium (MgO) dans le mélange d'oxydes céramiques représente jusqu'à 20 % du poids.

5. Procédé selon une ou plusieurs des revendications 1 à 4, **caractérisé en ce que** la proportion d'oxyde de magnésium (MgO) dans le mélange d'oxydes céramiques représente de 5 % à 10 % du poids.

6. Procédé selon une ou plusieurs des revendications 1 à 5, **caractérisé en ce que** l'oxyde de magnésium et l'oxyde de zirconium sont employés avec une grosseur de grains moyenne d'environ 20 µm à 120 µm et l'oxyde d'aluminium avec une grosseur de grains d'environ 20 µm à 200 µm.

7. Procédé selon une ou plusieurs des revendications 1 à 6, **caractérisé en ce que** la proportion de monophosphate d'ammonium (NH₄H₂PO₄) du liant par rapport au mélange d'oxydes céramiques est d'environ 5 % à 15 % en poids.

8. Procédé selon une ou plusieurs des revendications 1 à 7, **caractérisé en ce que** le liquide d'addition est une solution d'acide silicique.

9. Procédé selon une ou plusieurs des revendications 1 à 8, **caractérisé en ce que** l'on utilise jusqu'à 40 ml de liquide d'addition pour 100 g de masse d'enrobage.
